# EUROPEAN PATENT APPLICATION

(11) **EP 4 015 333 A1**
(43) Date of publication of application: **22.06.2022**
(21) Application number: 21209133.4
(22) Date of filing: 18.11.2021
(51) Int. Cl.: B60W 40/06, B60W 30/14

(54) **INDIRECT VERIFICATION OF SPEED LIMITS BASED ON CONTEXTUAL INFORMATION FOR AUTONOMOUS AND SEMI-AUTONOMOUS DRIVING SYSTEMS**

(30) Priority: 09.12.2020 US 202017117007
(71) Applicant: Aptiv Technologies Limited, St. Michael (BB)
(72) Inventor: Tamilarasan, Santhosh, Carmel, 46074 (US); Mujumdar, Tapan R., Rochester Hills, 48307 (US)
(74) Representative: Manitz Finsterwald Patent- und Rechtsanwaltspartnerschaft mbB

(57) **Abstract**

This document describes techniques and systems to indirectly verify speed limits based on contextual information for autonomous and semi-autonomous driving systems. In addition to camera systems, the described techniques and systems use other sensors and secondary factors to improve the accuracy and confidence in detecting posted speed limits. For example, a camera system captures an image or other data directly indicative of a speed limit. Contextual information for the road or vehicles nearby is also obtained and used to determine at least one indirect indication of the speed limit. A composite speed limit is identified by applying a respective weight to the direct and indirect indications of the speed limit. The described systems and techniques thereby enable controlling the vehicle based on the composite speed limit. In this way, the described systems and techniques can verify a speed limit to make autonomous and semi-autonomous driving systems safer.

## Description

### BACKGROUND

Autonomous and semi-autonomous driving systems can use camera systems to detect posted speed limits or suggested speeds for controlling vehicle acceleration and braking. Such camera systems, however, are susceptible to misinterpreting traffic signs. For example, even subtle changes to a traffic sign due to weather, graffiti, or other causes can introduce errors by the camera systems (e.g., by misidentifying a posted "35" mile-per-hour (mph) speed limit as being the start of a posted "85" mph zone). Misidentification of posted speed limits can lead to uncomfortable and unsafe driving, potentially resulting in crashes.

### SUMMARY

This document describes techniques and systems to indirectly verify speed limits based on contextual information for autonomous and semi-autonomous driving systems. In addition to camera systems, the described techniques and systems use other sensors and secondary factors to improve the accuracy and confidence in detecting posted speed limits. For example, a camera system captures an image or other data providing a direct indication of a speed limit. The described systems and techniques use at least one additional sensor to identify contextual information for the road or nearby vehicles. At least one indirect indication of the speed limit is determined based on the contextual information. The indirect indication of the speed limit can be used to verify the direct indication of the speed limit. A composite speed limit can also be identified by applying a respective weight to the direct and indirect indications of the speed limit. The described systems and techniques thereby enable control of the vehicle based on the verification of the direct indication of the speed limit or the composite speed limit. In this way, the described systems and techniques verify the indication of the speed limit to make autonomous and semi-autonomous driving systems safer.

This document also describes methods performed by the above-summarized techniques and systems set forth herein, as well as means for performing these methods.

This Summary introduces simplified concepts related to indirectly verifying speed limits based on contextual information for autonomous and semi-autonomous driving systems, further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of indirectly verifying speed limits based on contextual information for autonomous and semi-autonomous driving systems are described in this document with reference to the following figures. The same numbers are often used throughout the drawings to reference like features and components:
FIG. 1 illustrates an example environment in which a speed-determination module can indirectly verify speed limits based on contextual information for autonomous and semi-autonomous driving systems of a vehicle;
FIG. 2 illustrates an example configuration of a speed-determination module that can indirectly verify speed limits based on contextual information for autonomous and semi-autonomous driving systems;
FIG. 3 illustrates an example flowchart of a speed-determination module to indirectly verify a direct indication of a speed limit or identify a composite speed limit for driving systems;
FIG. 4 illustrates an example flowchart to correlate a camera-based speed limit based on regional policies;
FIG. 5 illustrates an example flowchart to determine traffic-based speed limits based on nearby vehicles;
FIG. 6 illustrates an example flowchart to determine indirect indications of speed limits based on map information and road design guidelines;
FIG. 7 illustrates an example flowchart to determine an expected speed-limit range based on previous direct indications of the speed limit or composite speed limits;
FIG. 8 illustrates an example flowchart to determine a composite speed limit based on the camera-based speed limit and context-based speed limits; and
FIG. 9 illustrates an example method to verify speed limits and identify composite speed limits for autonomous and semi-autonomous driving systems.

### DETAILED DESCRIPTION

### OVERVIEW

Accurate identification of speed limits or suggested speeds is an essential task for autonomous and semi-autonomous driving systems. As described above, autonomous and semi-autonomous driving systems can use camera systems to provide a direct indication of posted speed limits or suggested speeds, which is used to control vehicle speed.

Research has shown that autonomous and semi-autonomous driving systems are vulnerable to fake, altered, or damaged traffic signs. In particular, camera systems can misinterpret traffic signs and use an incorrect value to control the vehicle. For example, camera systems often misidentify signs with graffiti, holes, stickers, or other subtle changes. For example, errors may be caused by material (e.g., tape, trash, snow, dirt, debris) that covers most or all of a traffic sign, leading to incorrectly interpreted or missed speed limits.

Such errors can lead to uncomfortable driving or even unsafe driving. Consider an example with tape applied to a portion of a 35-mph speed-limit traffic sign. If the camera system identifies the speed limit as 85 mph, the vehicle will begin to accelerate and travel at a speed well above the speed limit. Besides being uncomfortable for the driver and passengers, such driving can also be disastrous and cause an accident.

Some autonomous and semi-autonomous driving systems use location data (e.g., Global Positioning System (GPS) data) to determine the speed limit from a map or database. Location data may not always be available or accurate, and thus the speed limit may not be determinable. In other situations, the map or database may not be up-to-date (e.g., because of temporary speed limits in construction zones or road changes) or may not account for conditional speed limits (e.g., traffic-based speed limits, conditions-based speed limits).

In contrast, this document describes techniques and systems to indirectly verify speed limits based on contextual information for autonomous and semi-autonomous driving systems. The direct indication of the speed limit from a camera system is compared to data from other sensors and sources of contextual information. For example, a system can use other sensors and sources of contextual information beyond just cameras or other visual sensors, to verify and improve the accuracy of direct indications of the speed limit. The sources of contextual information can include road design guidelines, regional speed-limit policies, and nearby traffic information. The system can use the contextual information from these sources to determine indirect indications of speed limits and verify the accuracy of a speed limit directly indicated by a camera. In this way, the described systems and techniques can detect posted speed-limits with great accuracy and a high degree-of-confidence, which may make autonomous and semi-autonomous driving systems safer.

This example is just one example of the described techniques and systems to indirectly verify speed limits based on contextual information for autonomous and semi-autonomous driving systems. This document describes other examples and implementations.

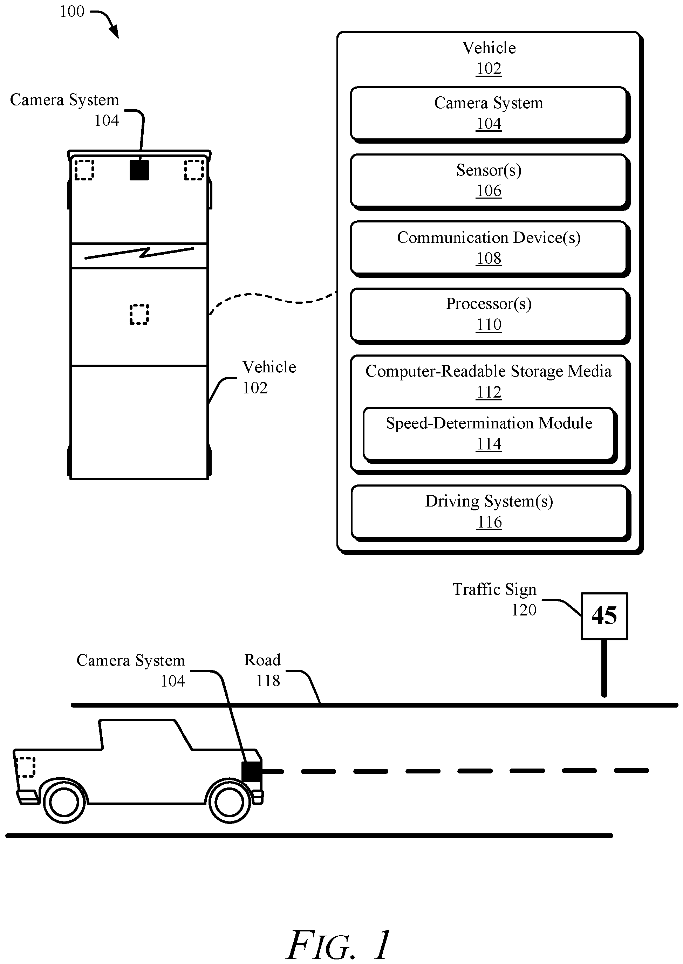

FIG. 1 illustrates an example environment 100 in which a speed-determination module 114 can indirectly verify speed limits based on contextual information for autonomous and semi-autonomous driving systems of a vehicle 102. The vehicle 102 can travel on a road 118.

Although illustrated as a car, the vehicle 102 can represent other types of motorized vehicles (e.g., a motorcycle, a bus, a tractor, a semi-trailer truck, or construction equipment). In general, manufacturers can use the speed-determination module 114 in any moving platform that can travel on the road 118.

The vehicle 102 includes a camera system 104 that is mounted on or near the front of the vehicle 102. The camera system 104 can take photographic images or video of the road 118 and any traffic signs 120 alongside, on, or above the road 118. The traffic sign 120 can provide a direct indication of a speed limit, a suggested speed (e.g., for a curve in the road 118), or a temporary speed limit (e.g., for a construction zone). In other implementations, a portion of the camera system 104 can be mounted into a rear-view mirror of the vehicle 102 to have a field-of-view of the road 118. In other implementations, the camera system 104 can project the field-of-view from any exterior surface of the vehicle 102. For example, vehicle manufacturers can integrate at least a part of the camera system 104 into a side mirror, bumper, roof, or any other interior or exterior location where the field-of-view includes the road 118. In general, vehicle manufacturers can design the location of the camera system 104 to provide an instrument field-of-view that sufficiently encompasses the road 118 on which the vehicle 102 may be traveling and the traffic signs 120 alongside the road 118.

The vehicle 102 also includes one or more sensors 106 to provide input data to one or more processors 110. The input data from the sensors 106 can be used to determine indirect indications of the speed limit. The sensors 106 can include a radar system, a positioning system (e.g., a global positioning system (GPS)), a lidar system, or any combination thereof. A radar system or a lidar system can use electromagnetic signals to detect objects in the road 118. A positioning system, such as a GPS, can determine a position of the vehicle 102 by receiving signals obtained from the positioning system as the vehicle 102 is traveling on the road 118.

The vehicle 102 also includes communication devices 108, one or more processors 110, and computer-readable storage media (CRM) 112. The communication devices 108 can be radio frequency (RF) transceivers to transmit and receive RF signals. The transceivers can include one or more transmitters and receivers incorporated together on the same integrated circuit (e.g., a transceiver integrated circuit) or separately on different integrated circuits. The communication devices 108 can be used to communicate with remote computing devices (e.g., a server or computing system providing navigation information or regional speed limit information), nearby structures (e.g., construction zone traffic signs, traffic lights, school zone traffic signs), or nearby vehicles. For example, the vehicle 102 can use the communication devices 108 to wirelessly exchange information with nearby vehicles using vehicle-to-vehicle (V2V) communication. The vehicle 102 can use V2V communication to obtain the speed, location, and heading of nearby vehicles. Similarly, the vehicle 102 can use the communication devices 108 to wirelessly receive information from nearby traffic signs or structures to indicate a temporary speed limit, traffic congestion, or other traffic-related information.

The communication devices 108 can include a sensor interface and a driving system interface. The sensor interface and the driving system interface can transmit data over a communication bus of the vehicle 102, for example, when the individual components of the speed-determination module 114 are integrated within the vehicle 102.

The processor 110 can be a microprocessor or a system-on-chip of a computing device. The processor 110 executes computer-executable instructions stored within the CRM 112. As an example, the processor 110 can execute the speed-determination module 114 to verify the direct indication of the speed limit or determine a composite speed limit for the road 118.

The processor 110 can receive, via the sensors 106 or the camera system 104, data as input to the speed-determination module 114. As an example, the processor 110 can receive image data or video data from the camera system 104. Similarly, the processor 110 can send configuration data or requests to the one or more sensors 106 or the camera system 104. The processor 110 can also execute the speed-determination module 114 to verify the direct indication of the speed limit or determine a composite speed limit and provide this as an input to one or more driving systems 116.

The CRM 112 can provide the vehicle 102 with persistent and nonpersistent storage of executable instructions (e.g., firmware, recovery firmware, software, applications, modules, programs, functions) and data (e.g., user data, operational data) to support the execution of the executable instructions. For example, the CRM 112 includes instructions that, when executed by the processor 110, execute the speed-determination module 114. Examples of the CRM 112 include volatile memory and non-volatile memory, fixed and removable media devices, and any suitable memory device or electronic data storage that maintains executable instructions and supporting data. The CRM 112 can include various implementations of random-access memory (RAM), static RAM (SRAM), dynamic RAM (DRAM), non-volatile RAM (NVRAM), read-only memory (ROM), flash memory, and other storage memory types in various memory device configurations. The CRM 112 excludes propagating signals. The CRM 112 can be a solid-state drive (SSD) or a hard disk drive (HDD).

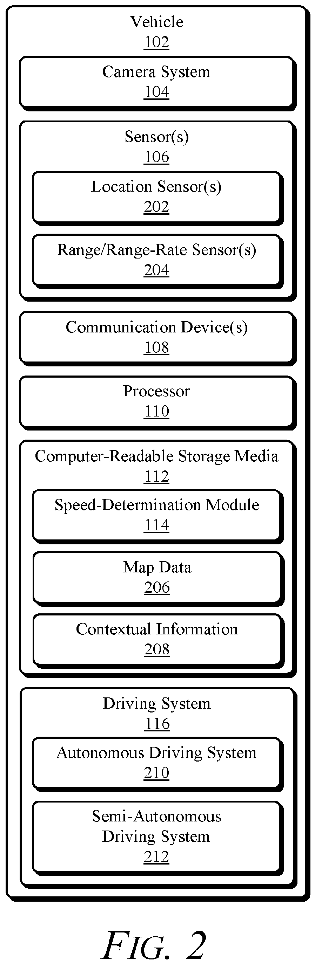

The speed-determination module 114 can verify a direct indication of the speed limit or determine a composite speed limit for the vehicle 102. As used herein, "a composite speed limit" combines speed limits determined based on data and contextual information from the sensors 106 and other sources to the direct indication of the posted speed limit from the camera system 104. In this way, the speed-determination module 114 can use data from the camera system 104 and the sensors 106 and contextual information to verify and improve its determination of the speed limit for the road 118. The operation and functionality of the speed-determination module 114 are described in greater detail with respect to FIGs. 2 through 9.

The vehicle 102 also includes the driving systems 116 that use data from the camera system 104 and the speed-determination module 114. The driving systems 116 can include an autonomous and semi-autonomous driving system. Generally, the driving systems 116 use the direct indication of the speed limit or the composite speed limit provided by the speed-determination module 114 to control the speed and operation of the vehicle 102. For example, the semi-autonomous driving system can provide automatic cruise control and adapt the speed of the vehicle based on a direct indication of the speed limit or a composite speed limit. As another example, the semi-autonomous driving system can provide alerts when the vehicle 102 exceeds the direct indication of the speed limit or the composite speed limit.

The autonomous driving system may control the operation of the vehicle 102 based on the direct indication of the speed limit or the composite speed limit while avoiding collisions with objects detected by other systems (e.g., a radar system, a lidar system) on the vehicle 102. Controlling the operation of the vehicle 102 can include controlling the vehicle 102 by way of accelerating, braking, shifting gears, flashing lights, enabling a horn, enabling hazard or turn signals, or otherwise controlling the vehicle 102 to safely navigate the road 118. The composite speed limit provided by the speed-determination module 114 can provide a validated speed limit for the road 118 but can also provide alerts to the driver when a speed limit cannot be validated.

FIG. 2 illustrates an example configuration of the speed-determination module 114 that can indirectly verify speed limits based on contextual information for an autonomous driving system 210 or semi-autonomous driving system 212. As described with respect to FIG. 1, the vehicle 102 can include the camera system 104, the sensors 106, the communication devices 108, the processor 110, the CRM 112, and the driving system 116.

The sensors 106 can include a location sensor 202 and one or more range and range-rate sensors 204. The location sensor 202, for example, can include a positioning system as mentioned above that can determine a position of the vehicle 102. For example, the speed-determination module 114 can use the position data from the location sensor 202 to look up the speed limit of the road 118 from map data 206 or contextual information 208 (e.g., regional policies for the position of the vehicle 102). The map data 206 and the contextual information 208 is stored in the CRM 112. In some implementations, the map data 206 or the contextual information 208 is stored in an online database or on a remote computing device, and the processor 110 can download, via the communication devices 108, the map data 206 or the contextual information 208.

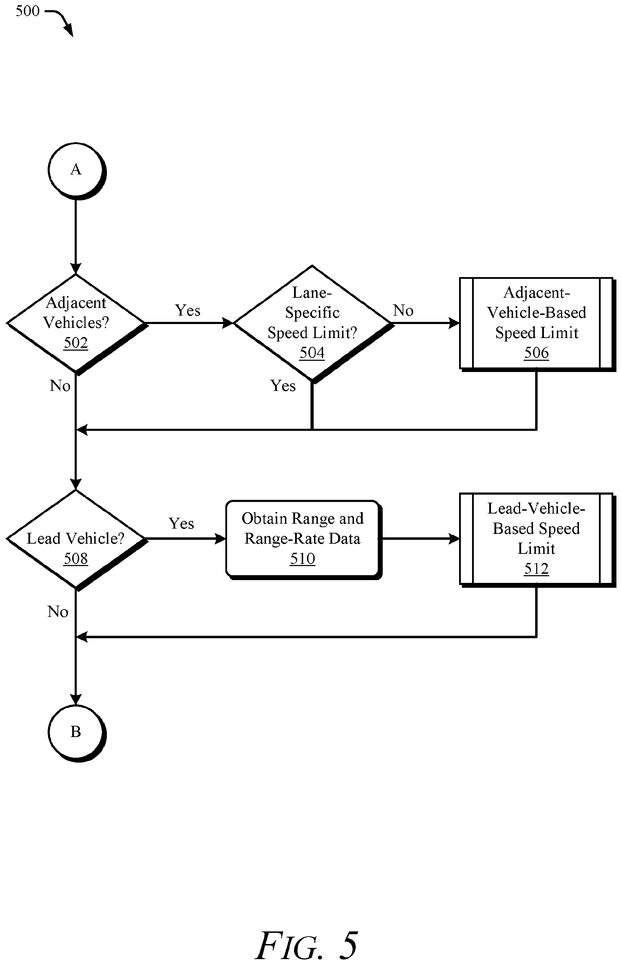

The range and range-rate sensors 204 can, for example, include a radar system, a lidar system, or a combination thereof. The radar system or the lidar system can use electromagnetic signals to detect objects (e.g., other vehicles) on the road 118. Data from the range and range-rate sensors 204 can provide a direct input to the speed-determination module 114. For example, the range and range-rate sensors 204 can determine the traveling speed of a vehicle in front of the vehicle 102 or nearby vehicles traveling in the same direction as the vehicle 102. As described with respect to FIG. 5, the speed-determination module 114 can use the traveling speed of the other vehicles to verify the speed limit detected by the camera system and provide a composite speed limit.

The map data 206 can provide a map of traveling routes (e.g., highways, freeways, streets, roads) in an area along with posted speed limits for the various routes. The contextual information 208 can include regional guidelines for speed limits. For example, many roads in the United States are subject to federal and state guidelines for determining the maximum speed limits. In Hawaii, the maximum speed limit is 60 mph. As a result, the speed-determination module 114 may determine that a speed limit of 70 mph detected by the camera system 104 on a road in Hawaii is an error.

The vehicle 102 also includes at least one driving system 116, such as an autonomous driving system 210 or a semi-autonomous driving system 212, that relies on data from the speed-determination module 114 to control the operation of the vehicle 102 (e.g., set the driving speed). Generally, the driving systems 116 use data provided by the speed-determination module 114 and the sensors 106 to control operations of the vehicle and perform certain functions. For example, the semi-autonomous driving system 212 can provide adaptive cruise-control and set the travel speed of the vehicle 102 to be no higher than the speed limit output by the speed-determination module 114. In this example, the data from the speed-determination module 114 indicate the speed limit and can set a maximum travel speed.

The autonomous driving system 210 can navigate the vehicle 102 to a particular destination while adhering to the speed limit along the road 118 as indirectly verified by the speed-determination module 114. The speed-limit data provided by the speed-determination module 114 can provide information about the local speed limit to enable the autonomous driving system 210 to adjust the speed of the vehicle 102.

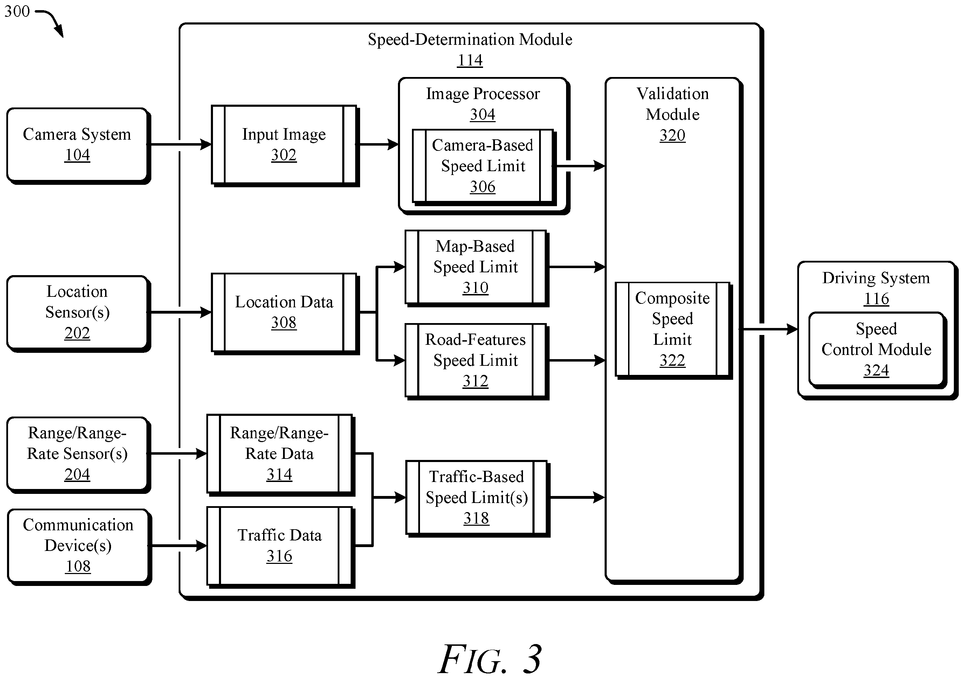

FIG. 3 illustrates an example flowchart 300 of the speed-determination module 114 to indirectly verify a direct indication of a speed limit or identify a composite speed limit 322 for the driving systems 116. The flowchart 300 illustrates example operations of the speed-determination module 114 of FIGs. 1 and 2. In some implementations, the speed-determination module 114 can include fewer or additional operations.

As described above, the camera system 104 can take an input image 302 of the traffic sign 120. The camera system 104 can provide the input image 302 to an image processor 304. In some implementations, the image processor 304 can use a deep neural network to classify the speed limit information contained in the input image 302. In particular, the image processor 304 can process the input image 302 to extract regions of interest within the traffic sign 120. The extracted regions of interest can be fed as inputs to a pre-trained deep neural network or machine-learned model to classify the traffic sign 120 and determine a camera-based speed limit 306 for the road 118, which provides a direct indication of the speed limit for the road 118.

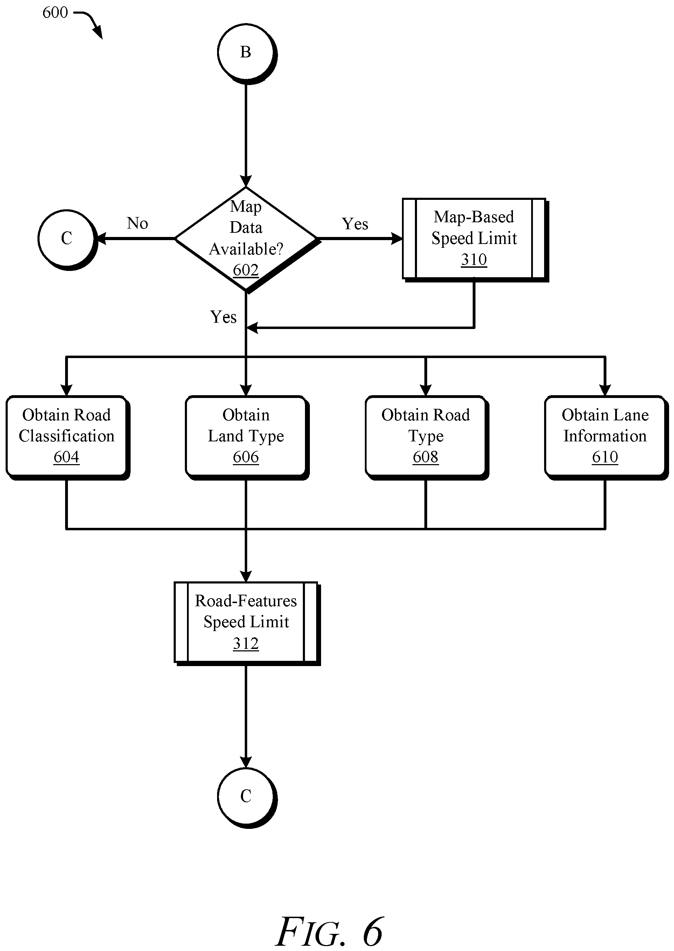

The location sensors 202 can determine location data 308 for the vehicle 102 that indicate the current position of the vehicle 102 on the road 118. Based on the location data 308, the speed-determination module 114 can determine a map-based speed limit 310. The map-based speed limit 310 is obtained from a map in the CRM 112 that includes speed-limit information for the road 118. The location data 308 can also be used to identify a road-features speed limit 312 based on regional guidelines in the location. Determination of the road-features speed limit 312 is described in greater detail with respect to FIG. 6.

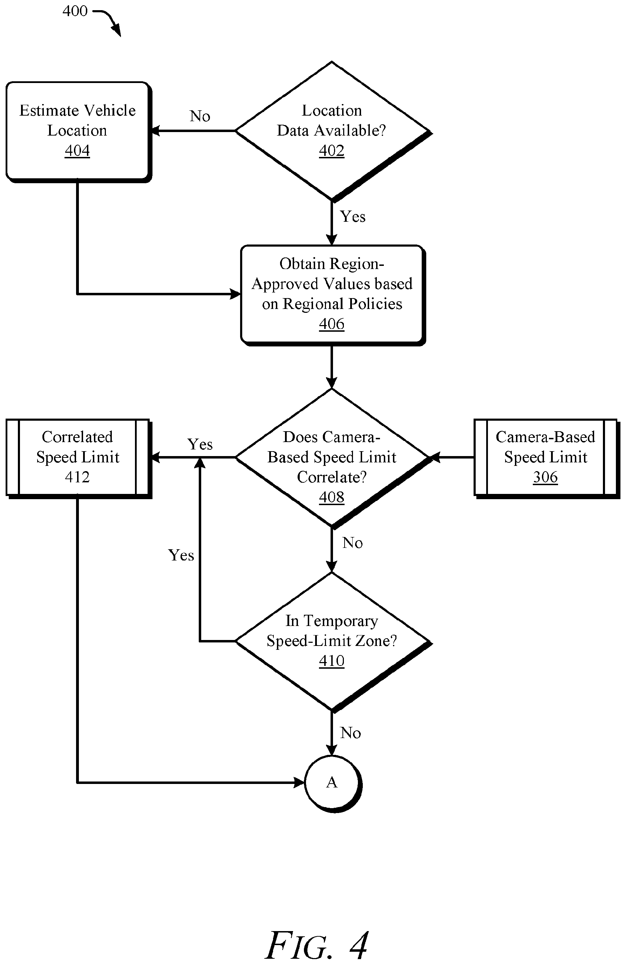

The speed-determination module 114 can also use the location data 308 to correlate the camera-based speed limit 306. In particular, the speed-determination module 114 can use the location data 308 to look up regional policies for the road 118 and determine whether the camera-based speed limit 306 conforms to the regional policies. The correlation process of the speed-determination module 114 is described in greater detail with respect to FIG. 4.

The speed-determination module 114 can obtain range and range-rate data 314 from range and range-rate sensors 204. As described above, the range and range-rate sensors 204 can include radar or lidar systems. The speed-determination module 114, via V2V communications using the communication devices 108, can also obtain traffic data 316 for nearby vehicles. The range and range-rate data 314 and the traffic data 316 can be used to generate one or more traffic-based speed limit 318. The traffic-based speed limit 318 accounts for the travel speed of a lead vehicle, nearby vehicles, or a combination thereof. The determination of the traffic-based speed limit 318 is described in greater detail with respect to FIG. 5.

Using the indirect indications of speed limits (e.g., the map-based speed limit 310, the road-features speed limit 312, and the traffic-based speed limit 318), a validation module 320 of the speed-determination module 114 can verify the camera-based speed limit 306 or identify the composite speed limit 322. The validation module 320 can also validate the composite speed limit 322 against previously determined composite speed limits. The validation module 320 can then provide the composite speed limit 322 to a speed-control module 324 of the driving systems 116. The speed-control module 324 can control the speed of the vehicle 102 to be no greater than the composite speed limit 322 or within a certain amount of the composite speed limit 322 by controlling the acceleration or braking of the vehicle 102.

In this way, the described systems and techniques can reduce the potential to misinterpret the traffic sign 120 by utilizing an array of contextual information that is directly available or indirectly available from sensor data. Using the contextual information to supplement a direct indication of the speed limit makes the composite speed limit 322, which is provided to the driving system 116, more robust and more likely to be correct.

FIG. 4 illustrates an example flowchart 400 to correlate the camera-based speed limit 306 based on regional policies. The flowchart 400 illustrates example operations of the speed-determination module 114 of FIGs. 1 through 3. In some implementations, the speed-determination module 114 can include fewer or additional operations to correlate the camera-based speed limit 306.

At 402, the speed-determination module 114 determines whether location data 308 for the vehicle 102 is available. As described above, the location sensors 202 can provide the location data 308. In some implementations, the speed-determination module 114 can use communication devices 108 to determine the location data 308 from nearby vehicles or roadside devices using V2V communications.

If no location data is currently available, at 404, the speed-determination module 114 estimates the location of the vehicle 102 based on the last-known location of the vehicle 102, dead reckoning, or a combination thereof. To correlate the camera-based speed limit 306, an estimated location of the vehicle 102 can be sufficient. A precise location is not required to obtain relevant regional policies for the speed limit of the road 118.

At 406, the speed-determination module 114 obtains region-approved speed limits based on regional policies for the vehicle location. The speed-determination module 114 can use the estimated or precise location to identify the appropriate regional policies. For example, based on the estimated or precise location, the speed-determination module 114 can identify the maximum speed limits from federal and state guidelines for that location. The regional guidelines are generally public information. Engineers or manufacturers can preload the regional policies into the CRM 112 or speed-determination module 114. In other implementations, the speed-determination module 114 or another component of the vehicle 102 can download the regional policies from a central database. Consider as an example that the vehicle is traveling on a highway in Idaho. The maximum speed limit in Idaho is 80 mph.

At 408, the speed-determination module 114 determines whether the camera-based speed limit 306 correlates to the regional policies. Consider the previous example of the vehicle 102 traveling on a highway in Idaho. The speed-determination module 114 can compare the camera-based speed limit 306 to the Idaho policies.

At 410, if the speed-determination module 114 determines that the camera-based speed limit 306 does not correlate to the regional policies, the speed-determination module 114 can determine whether the vehicle is traveling in a temporary speed-limit zone. The temporary speed-limit zone can include a construction zone, a traffic-based speed limit, a weather-based speed limit, or some other temporary speed limit. The speed-determination module 114 can use the camera system 104 to determine whether the vehicle is traveling in a temporary speed limit zone. As one example, the camera system 104 can detect that the vehicle 102 is traveling in a construction zone on the Idaho highway with a temporary speed limit of 55 mph. The speed-determination module 114 can also use the communication devices 108 to obtain information from nearby traffic signs or structures indicating the temporary speed limit.

At 412, the speed-determination module 114 identifies the correlated speed limit 412 in response to determining that the camera-based speed limit 306 correlates to the regional policies (at operation 408) or the vehicle is traveling in a temporary speed limit zone (at operation 410).

After identifying the correlated speed limit 412 or determining that the vehicle 102 is not traveling in a temporary speed-limit zone (at operation 410), the speed-determination module 114 proceeds to operation "A," which is described with respect to FIG. 5. If the speed-determination module 114 determines that the vehicle 102 is not traveling in a temporary speed-limit zone, the speed-determination module can also disengage the autonomous driving system 210 or the semi-autonomous driving system 212.

FIG. 5 illustrates an example flowchart 500 to determine traffic-based speed limits based on nearby vehicles. In particular, the flowchart 500 illustrates operations to determine an adjacent-vehicle-based speed limit 506 and a lead-vehicle-based speed limit 512 based on the traveling speed of nearby vehicles. The flowchart 500 illustrates example operations of the speed-determination module 114 of FIGs. 1 through 3. In some implementations, the speed-determination module 114 can include fewer or additional operations to determine traffic-based speed limits.

The speed-determination module 114 begins at operation "A" discussed above with respect to FIG. 4. At 502, the speed-determination module 114 can determine, using the sensors 106 (e.g., the range and range-rate sensors 204), the camera system 104, or V2V communication, whether vehicles are traveling in an adjacent lane to the vehicle 102. For example, the vehicle 102 can use radar, lidar, camera, or other sensors to determine whether there are vehicles traveling in the same direction as the vehicle 102 in adjacent traffic lanes. The sensors can be mounted on the front, rear, or side of the vehicle 102 with a field-of-view that allows the vehicle 102 to detect vehicles in adjacent lanes.

At 504, if a vehicle is detected in an adjacent lane, the speed-determination module 114 determines whether the adjacent lane is subject to a lane-specific speed limit. The speed-determination module 114 can use data from the camera system 104 to determine whether the adjacent lane is subject to a lane-specific speed limit. For example, a left lane of a highway may have an 80-mph speed limit, while the right lane has a 70-mph speed limit. As another example, the adjacent vehicle may be subject to a different speed limit. Some highways have different speed limits for trucks, tractor trailers, and vehicles towing another vehicle. In such situations, the speed-determination module 114 can determine that the adjacent vehicle is subject to a different speed limit based on the adjacent vehicle being subject to the different (e.g., lower) speed limit.

If the adjacent vehicle is not subject to a lane-specific speed limit, the speed-determination module 114 infers the adjacent-vehicle-based speed limit 506. The speed-determination module 114 can use radar or lidar sensors to determine the traveling speed of the nearby vehicles in the adjacent lanes. The speed-determination module 114 can also use V2V information communicated by the nearby vehicles to determine their traveling speed. Based on the traveling speed of the nearby vehicles, the speed-determination module 114 infers the adjacent-vehicle-based speed limit 506.

If the adjacent vehicle is subject to a lane-specific speed limit, the speed-determination module 114 does not consider the adjacent vehicle speed to infer the speed limit. In this way, the speed-determination module 114 avoids using the speed limit applicable to a different lane or different types of vehicles to infer the speed limit for the vehicle 102.

At 508, the speed-determination module 114 determines whether another vehicle is traveling ahead of the vehicle 102 in the same traffic lane (e.g., a "lead vehicle"). Similar to detecting potential adjacent vehicles, the speed-determination module 114 can use radar, lidar, camera, or other sensors to detect a lead vehicle.

At 510, the speed-determination module 114 obtains range and range-rate data for the lead vehicle. The speed-determination module 114 can use radar, lidar, or camera sensors to determine the range and range-rate data 314. In particular, the range data can identify the distance between the vehicle 102 and the lead vehicle. The range-rate data can identify the traveling speed of the lead vehicle. In another implementation, the speed-determination module 114 can use V2V information from the lead vehicle to identify or verify the range and range-rate data 314 for the lead vehicle. Using the range and range-rate data 314, the speed-determination module 114 can infer the lead-vehicle-based speed limit 512.

If no lead vehicle is detected or after determining the lead-vehicle-based speed limit 512, the speed-determination module 114 proceeds to operation "B," which is described below with respect to FIG. 6.

FIG. 6 illustrates an example flowchart 600 to determine indirect indications of speed limits based on map information and road design guidelines. In particular, the flowchart 600 illustrates operations to determine the map-based speed limit 310 and the road-features speed limit 312 based on the location data 308 and road design guidelines. The flowchart 600 illustrates example operations of the speed-determination module 114 of FIGs. 1 through 3. In some implementations, the speed-determination module 114 can include fewer or additional operations to determine the map-based speed limit 310 and the road-features speed limit 312.

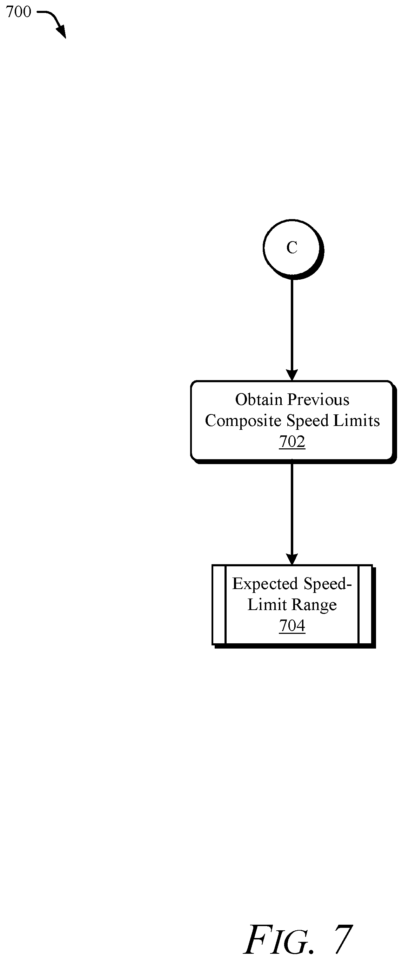

At 602, the speed-determination module 114 determines whether map data of the road 118 is available. The map data can be stored in the CRM 112 of the vehicle 102 or can be stored remotely and accessed via the communication devices 108. If map data is not available for the road 118, the speed-determination module 114 proceeds to operation "C," which is described with respect to FIG. 7.

If map data for the road 118 is available, the speed-determination module 114 identifies the map-based speed limit 310 for the road 118. The speed-determination module 114 can also use the map data to access characteristic information of the road 118. As described below, the speed-determination module 114 can determine the road-features speed limit 312 based on characteristics of the road 118 using a lookup table.

At 604, the speed-determination module 114 obtains road classification information for the road 118. The road classification information can include whether the road 118 is an arterial road, collector road, or local road. Arterial roads generally have higher speed limits than collector roads, and collector roads generally have higher speed limits than local roads. The road classification information can also identify whether an arterial or collector road is a major or minor road. Major roads generally have higher speed limits than minor roads. For example, the road design guidelines from the United States Federal Highway Administration (FHA) report suggests that a divided major arterial road in an urban area have a speed limit of 55 mph. (See e.g., Methods and Practices for Setting Speed Limits: An Informational Report, available at https://safety.fhwa.dot.gov/speedmgt/ref_mats/fhwasa12004/). In contrast, the FHA suggests a divided major collector road in an urban area have a speed limit of 50 mph, while a local road in an urban area have a speed limit of 30 mph. As another example, the FHA suggests that a divided minor arterial road in an urban area have a speed limit of 50 mph. Additional example speed limits based on road-characteristic information are provided below in Table 1.

At 606, the speed-determination module 114 obtains land-type information for the road 118. The land-type information can include whether the road 118 is in an urban or rural area. Rural roads generally have higher speed limits than urban roads. For example, the FHA suggests an undivided major arterial road in a rural area have a speed limit of 55 mph. In contrast, the FHA suggests an undivided major arterial road in an urban area have a speed limit of 50 mph.

At 608, the speed-determination module 114 obtains road-type information for the road 118. The road-type information can include whether the road 118 is a divided road or undivided road. Divided roads generally have higher speed limits than undivided roads. For example, the FHA suggests that a divided major arterial road in an urban area have a speed limit of 55 mph. In contrast, the FHA suggests an undivided major arterial road in an urban area have a speed limit of 50 mph.

At 610, the speed-determination module 114 obtains lane information for the road 118. The lane information can include whether the road 118 includes a single lane or multiple lanes in each direction. For urban roads, the lane information may not affect the suggested speed limit. In rural areas, multiple-lane roads generally have higher speed limits than single-lane roads. For example, the FHA report suggests that a single-lane divided major arterial in a rural area have a speed limit of 60 mph. In contrast, the FHA suggests a speed limit of 70 mph for a multiple-lane, divided major arterial in a rural area.

The speed-determination module 114 can use the road-characteristic information to identify a suggested speed limit from road design guidelines. For example, the speed-determination module 114 can look up the road-features speed limit 312 using values reported in the FHA. Table 1 below provides example suggested speed limits based on road-characteristic information.

After identifying the road-features speed limit 312, the speed-determination module 114 proceeds to operation "C," which is described with respect to FIG. 7.

**Table 1**

| | *Rural* | | | | *Urban* | | | |
|---|---|---|---|---|---|---|---|---|
| | *Undivided* | | *Divided* | | *Undivided* | | *Divided* | |
| | *Single- lane* | *Multiple- lane* | *Single- lane* | *Multiple-lane* | *Single- lane* | *Multiple- lane* | *Single- lane* | *Multiple-lane* |
| *Arterial Major* | 55 | 60 | 60 | 70 | 50 | | 55 | |
| *Minor* | 50 | 55 | 55 | 60 | 45 | | 50 | |
| *Collector Major* | 45 | 50 | 50 | 55 | 45 | | 50 | |
| *Minor* | 35 | 45 | 45 | 50 | 35 | | 45 | |
| *Local* | 35 | | | | 30 | | | |

FIG. 7 illustrates an example flowchart 700 to determine an expected speed-limit range 704 based on previous direct indications of the speed limit or composite speed limits. The flowchart 700 illustrates example operations of the speed-determination module 114 of FIGs. 1 through 3. In some implementations, the speed-determination module 114 can include fewer or additional operations to determine the expected speed-limit range 704.

At 702, the speed-determination module 114 obtains previously determined composite speed limits or previous direct indications of the speed limit. For example, the previous composite speed limits or direct indications of the speed limit can be stored in the CRM 112. As a composite speed limit is determined by the speed-determination module 114 according to the described systems and techniques, the speed-determination module 114 can store it in a registry or database of the CRM 112. Similarly, as a direct indication of a speed limit is verified by the speed-determination module 114 based on the contextual information, the speed-determination module 114 can store it in the registry or database. The speed-determination module 114 can also store the location of the vehicle, road name, or similar information to associate the speed limit with the road 118.

The speed-determination module 114 can compare the composite speed limit or a direct indication of a speed limit to a composite speed limit or a direct indication of a speed limit determined for a previous location along the road 118. This comparison provides a reasonableness check to ensure that the inferred speed limit has not drastically changed in a short distance. For example, the FHA report suggests graduated zones on approaches to cities and other densely populated areas to provide a gradual reduction of speed limits. The change in the speed limit between two adjacent zones is generally no greater than 15 mph to avoid a change that is too abrupt for safety. From a previous composite speed limit, the speed-determination module 114 can compute a range of expected values (e.g., the previous speed limit minus 15 mph and plus 15 mph).

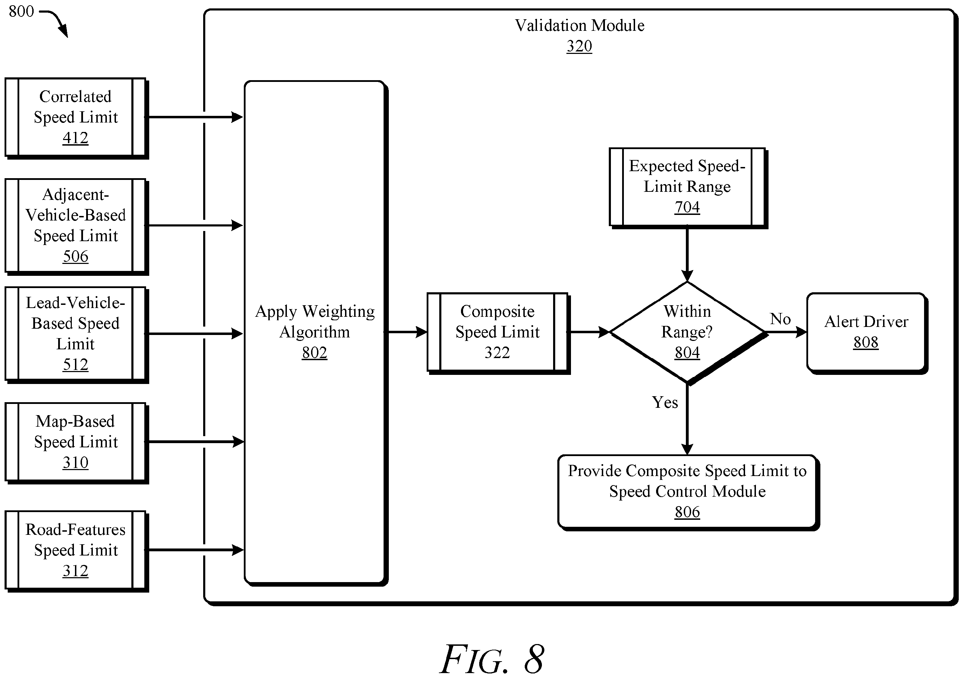

FIG. 8 illustrates an example flowchart 800 to determine the composite speed limit 322. In particular, the flowchart 800 illustrates operations to determine the composite speed limit 322 and verify it is within the expected speed-limit range 704. The flowchart 800 illustrates example operations of the validation module 320 of FIG. 3. In some implementations, the validation module 320 can include fewer or additional operations.

At 802, the validation module 320 applies a weighting algorithm to the correlated speed limit 412, the adjacent-vehicle-based speed limit 506, the lead-vehicle-based speed limit 512, the map-based speed limit 310, and the road-features speed limit 312. The weighting algorithm can apply linear weights to each input value to determine the composite speed limit 322. The linear weights generally sum to one. Engineers can set the linear weights to have equal values or can set the values to provide a heavier weight to certain inputs. In other implementations, non-linear weights can be applied to the input speed limits.

At 804, the validation module 320 determines whether the composite speed limit 322 is within the expected speed-limit range 704. At 806, if the composite speed limit 322 is within the expected speed-limit range 704, the validation module 320 provides the composite speed limit 322 to the driving systems 116 or the speed-control module 324.

At 808, if the composite speed limit 322 is not within the expected speed-limit range 704, the validation module 320 alerts the driver. The alert can include a message that there was a misinterpretation or difficulty in determining the current speed limit. The alert can also include a prompt for the driver to set the speed limit. In this scenario, the validation module 320 can also discontinue autonomous or semi-autonomous operation of the vehicle.

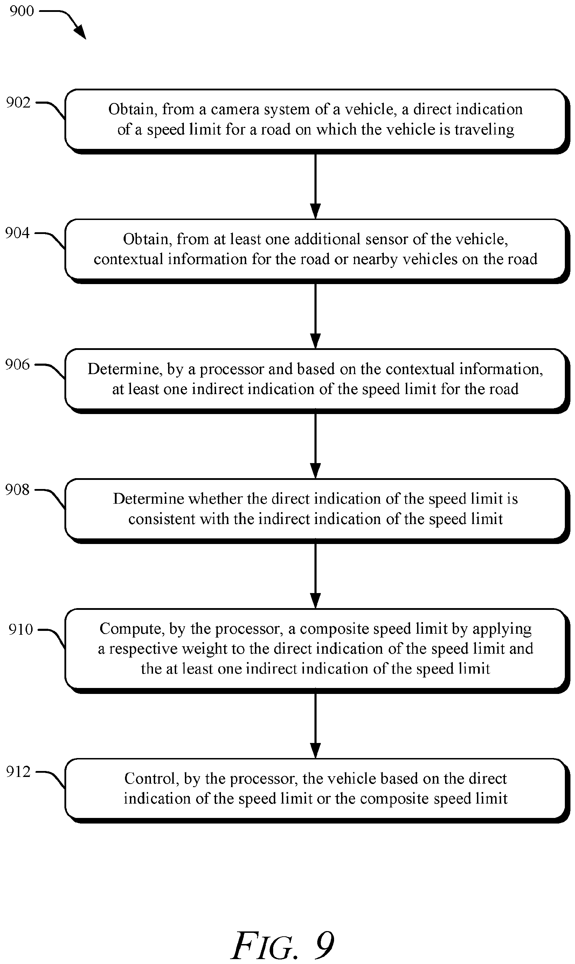

FIG. 9 illustrates an example method 900 to verify speed limits and identify composite speed limits for autonomous and semi-autonomous driving systems. Method 900 is shown as sets of operations (or acts) performed, but not necessarily limited to the order or combinations in which the operations are shown herein. Further, any of one or more of the operations may be repeated, combined, or reorganized to provide other methods. In portions of the following discussion, reference may be made to the environment 100 of FIG. 1, and entities detailed in FIGs. 1 through 8, reference to which is made for example only. The techniques are not limited to performance by one entity or multiple entities.

At 902, a camera system of a vehicle obtains a direct indication of a speed limit for a road on which the vehicle is traveling. For example, the camera system 104 of the vehicle 102 obtains the camera-based speed limit 306 for the road 118 on which the vehicle 102 is traveling. The direct indication of the posted speed limit can include an image of the traffic sign 120 or processing of the image thereof by the camera system 104 to identify the posted speed limit. Example operations of the camera system 104 are described with respect to FIGs. 1 and 3.

At 904, at least one additional sensor of the vehicle obtains contextual information for the road or nearby vehicles on the road. For example, the sensors 106 or the communication devices 108 obtain contextual information for the road 118 or nearby vehicles on the road 118. The contextual information can include the speed of a lead vehicle, the speed of nearby vehicles in adjacent lanes, regional speed-limit policies, and road design guidelines. Examples of contextual information obtained by the sensors 106 are described with respect to FIGs. 5 through 7.

At 906, a processor of the vehicle determines at least one indirect indication of the speed limit for the road based on the contextual information. For example, the processor 110 executes the speed-determination module 114 to determine at least one indirect indication of the speed limit for the road 118. The indirect indications of the speed limit can include the correlated speed limit 412, the adjacent-vehicle-based speed limit 506, the lead-vehicle-based speed limit 512, the map-based speed limit 310, and the road-features speed limit 312. Examples of the operations to determine at least one indirect indication of the speed limit are described with respect to FIGs. 5 through 7.

At 908, the processor determines whether the direct indication of the speed limit is consistent with the indirect indication of the speed limit. For example, the processor 110 executes the speed-determination module 114 to determine whether the camera-based speed limit 306 is consistent with the region-approved values, the adjacent-vehicle-based speed limit 506, the lead-vehicle-based speed limit 512, the map-based speed limit 310, the road-features speed limit 312, or a combination thereof.

At 910, the processor computes a composite speed limit by applying a respective weight to the direct indication of the posted speed limit and the at least one indirect indication of the speed limit. The respective weights can sum to one. For example, the processor 110 executes the validation module 320 to compute the composite speed limit 322 by applying a respective weight to the camera-based speed limit 306 and the at least one indirect indication of the speed limit. Examples of the operations to compute the composite speed limit 322 are described with respect to FIG. 8.

At 910, the processor controls the vehicle based on the direct indication of the speed limit or the composite speed limit. For example, the processor 110 causes the driving systems 116 or the speed-control module 324 to control the vehicle 102 based on the composite speed limit 322. As another example, the processor 110 causes the driving systems 116 or the speed-control module 324 to control the vehicle 102 based on the direct indication of the speed limit in response to determining that the direct indication of the speed limit is consistent with the indirect indication of the speed limit.

### EXAMPLES

In the following section, examples are provided.

Example 1: A method comprising: obtaining, from a camera system of a vehicle, a direct indication of a speed limit for a road on which the vehicle is traveling; obtaining, from at least one additional sensor of the vehicle, contextual information for the road or nearby vehicles on the road; determining, by a processor of the vehicle and based on the contextual information, at least one indirect indication of the speed limit for the road; determining, by the processor, whether the direct indication of the speed limit is consistent with the indirect indication of the speed limit; and in response to determining that the direct indication of the speed limit is consistent with the indirect indication of the speed limit, controlling, by the processor, the vehicle based on the direct indication of the speed limit.

Example 2: The method of example 1, the method further comprising: computing, by the processor, a composite speed limit by applying a respective weight to the direct indication of the speed limit and the at least one indirect indication of the speed limit; and controlling, by the processor, the vehicle based on the composite speed limit.

Example 3: The method of example 2, the method further comprising: determining a location of the vehicle; obtaining, based on the location of the vehicle, regional speed-limit policies; determining whether the direct indication of the speed limit is consistent with the regional speed-limit policies; and in response to determining that the direct indication of the speed limit is consistent with the regional speed-limit policies, outputting the direct indication of the speed limit as a correlated speed limit, wherein computing the composite speed limit by applying the respective weight to the direct indication of the speed limit and the at least one indirect indication of the speed limit comprises computing the composite speed limit by applying the respective weight to the correlated speed limit and the at least one indirect indication of the speed limit.

Example 4: The method of example 3, the method further comprising: in response to determining that the direct indication of the speed limit is not consistent with the regional speed-limit policies, determining whether the vehicle is in a temporary speed limit zone; and in response to determining that the vehicle is in the temporary speed limit zone, outputting the direct indication of the speed limit as the correlated speed limit.

Example 5: The method of example 4, the method further comprising: in response to determining that the vehicle is not in a temporary speed limit zone, disengaging an autonomous driving system or semi-autonomous driving system of the vehicle.

Example 6: The method of any of examples 2 through 4, the method further comprising: determining a location of the vehicle; obtaining, based on the location of the vehicle, characteristic information for the road, the characteristic information including at least one of a road classification, a land type, a road type, or lane information for the road; and determining a road-features speed limit based on the characteristic information for the road, the road-features speed limit comprising an indirect indication of the speed limit of the at least one indirect indication of the speed limit.

Example 7: The method of any of examples 3 through 5, wherein obtaining the location of the vehicle comprises at least one of: obtaining, from a positioning system, a current location of the vehicle; or obtaining a last known location of the vehicle from a positioning system or estimating the location of the vehicle using the last known location of the vehicle.

Example 8: The method of any of examples 3 through 5, wherein the regional speed-limit policies are stored in a memory of the vehicle.

Example 9: The method of any of examples 3 through 5, wherein the regional speed-limit policies are obtained from a database located remote from the vehicle.

Example 10: The method of any of examples 2 through 9, the method further comprising: determining whether there is another vehicle traveling in an adjacent lane; in response to determining that the other vehicle is traveling in an adjacent lane, determining whether the other vehicle is not subject to a different speed limit; and in response to determining that the other vehicle is not subject to the different speed limit, determining an adjacent-vehicle-based speed limit based on a speed of the other vehicle, the adjacent-vehicle-based speed limit comprising an indirect indication of the speed limit of the at least one indirect indication of the speed limit.

Example 11: The method of any of examples 2 through 10, the method further comprising: determining whether there is a lead vehicle traveling in a same lane as the vehicle; in response to determining that there is a lead vehicle traveling in the same lane as the vehicle, obtaining range and range-rate data for the lead vehicle; and determining a lead-vehicle-based speed limit based on a speed of the lead vehicle, the lead-vehicle-based speed limit comprising an indirect indication of the speed limit of the at least one indirect indication of the speed limit.

Example 12: The method of any of examples 2 through 11, the method further comprising: obtaining a previous composite speed limit for the road; determining, based on the previous composite speed limit, an expected speed-limit range for the composite speed limit; determining whether the composite speed limit is within the expected speed-limit range; and in response to determining that the composite speed limit is within the expected speed-limit range, controlling the vehicle based on the composite speed limit.

Example 13: The method of any of examples 1 through 12, wherein the vehicle is operated by a semi-autonomous driving system or an autonomous driving system.

Example 14: A system comprising at least one processor configured to: obtain, from a camera system of a vehicle, a direct indication of a speed limit for a road on which the vehicle is traveling; obtain, from at least one additional sensor of the vehicle, contextual information for the road or nearby vehicles on the road; determine, by a processor of the vehicle and based on the contextual information, at least one indirect indication of the speed limit for the road; determine, by the processor, whether the direct indication of the speed limit is consistent with the indirect indication of the speed limit; and in response to a determination that the direct indication of the speed limit is consistent with the indirect indication of the speed limit, control, by the processor, the vehicle based on the direct indication of the speed limit.

Example 15: The system of example 14, wherein the at least one processor is further configured to: compute, by the processor, a composite speed limit by applying a respective weight to the direct indication of the speed limit and the at least one indirect indication of the speed limit; and control, by the processor, the vehicle based on the composite speed limit.

Example 16: The system of example 15, wherein the at least one processor is further configured to: determine a location of the vehicle; obtain, based on the location of the vehicle, regional speed-limit policies; determine whether the direct indication of the speed limit is consistent with the regional speed-limit policies; and in response to a determination that the direct indication of the speed limit is consistent with the regional speed-limit policies, output the direct indication of the speed limit as a correlated speed limit, wherein the computation of the composite speed limit by applying the respective weight to the direct indication of the speed limit and the at least one indirect indication of the speed limit comprises computing the composite speed limit by applying the respective weight to the correlated speed limit and the at least one indirect indication of the speed limit.

Example 17: The system of example 15 or 16, wherein the at least one processor is further configured to: determine a location of the vehicle; obtain, based on the location of the vehicle, characteristic information for the road, the characteristic information including at least one of a road classification, a land type, a road type, or lane information for the road; and determine a road-features speed limit based on the characteristic information for the road, the road-features speed limit comprising an indirect indication of the speed limit of the at least one indirect indication of the speed limit.

Example 18: The system of any of examples 15 through 17, wherein the at least one processor is further configured to: determine whether there is another vehicle traveling in an adjacent lane; in response to a determination that the other vehicle is traveling in an adjacent lane, determine whether the other vehicle is not subject to a different speed limit; and in response to a determination that the other vehicle is not subject to the different speed limit, determine an adjacent-vehicle-based speed limit based on a speed of the other vehicle, the adjacent-vehicle-based speed limit comprising an indirect indication of the speed limit of the at least one indirect indication of the speed limit.

Example 19: The system of any of examples 15 through 18, wherein the at least one processor is further configured to: determine whether there is a lead vehicle traveling in a same lane as the vehicle; in response to a determination that there is a lead vehicle traveling in the same lane as the vehicle, obtain range and range-rate data for the lead vehicle; and determine a lead-vehicle-based speed limit based on a speed of the lead vehicle, the lead-vehicle-based speed limit comprising an indirect indication of the speed limit of the at least one indirect indication of the speed limit.

Example 20: A computer-readable storage medium comprising instructions that, when executed, cause at least one processor of a system to: obtain, from a camera system of a vehicle, a direct indication of a speed limit for a road on which the vehicle is traveling; obtain, from at least one additional sensor of the vehicle, contextual information for the road or nearby vehicles on the road; determine, based on the contextual information, at least one indirect indication of the speed limit for the road; determine, by the processor, whether the direct indication of the speed limit is consistent with the indirect indication of the speed limit; and in response to a determination that the direct indication of the speed limit is consistent with the indirect indication of the speed limit, control, by the processor, the vehicle based on the direct indication of the speed limit.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

## Claims

1. A method comprising:
obtaining, from a camera system of a vehicle, a direct indication of a speed limit for a road on which the vehicle is traveling;
obtaining, from at least one additional sensor of the vehicle, contextual information for the road or nearby vehicles on the road;
determining, by a processor of the vehicle and based on the contextual information, at least one indirect indication of the speed limit for the road;
determining, by the processor, whether the direct indication of the speed limit is consistent with the indirect indication of the speed limit; and
in response to determining that the direct indication of the speed limit is consistent with the indirect indication of the speed limit, controlling, by the processor, the vehicle based on the direct indication of the speed limit.

2. The method of claim 1, the method further comprising:
computing, by the processor, a composite speed limit by applying a respective weight to the direct indication of the speed limit and the at least one indirect indication of the speed limit; and
controlling, by the processor, the vehicle based on the composite speed limit.

3. The method of claim 2, the method further comprising:
determining a location of the vehicle;
obtaining, based on the location of the vehicle, regional speed-limit policies;
determining whether the direct indication of the speed limit is consistent with the regional speed-limit policies; and
in response to determining that the direct indication of the speed limit is consistent with the regional speed-limit policies, outputting the direct indication of the speed limit as a correlated speed limit,
wherein computing the composite speed limit by applying the respective weight to the direct indication of the speed limit and the at least one indirect indication of the speed limit comprises computing the composite speed limit by applying the respective weight to the correlated speed limit and the at least one indirect indication of the speed limit.

4. The method of claim 3, the method further comprising:
in response to determining that the direct indication of the speed limit is not consistent with the regional speed-limit policies, determining whether the vehicle is in a temporary speed limit zone; and
in response to determining that the vehicle is in the temporary speed limit zone, outputting the direct indication of the speed limit as the correlated speed limit.

5. The method of claim 4, the method further comprising:
in response to determining that the vehicle is not in a temporary speed limit zone, disengaging an autonomous driving system or semi-autonomous driving system of the vehicle.

6. The method of any of claims 2 through 5, the method further comprising:
determining a location of the vehicle;
obtaining, based on the location of the vehicle, characteristic information for the road, the characteristic information including at least one of a road classification, a land type, a road type, or lane information for the road; and
determining a road-features speed limit based on the characteristic information for the road, the road-features speed limit comprising an indirect indication of the speed limit of the at least one indirect indication of the speed limit.

7. The method of any of claims 3 through 5, wherein obtaining the location of the vehicle comprises at least one of:
obtaining, from a positioning system, a current location of the vehicle; or
obtaining a last known location of the vehicle from a positioning system or estimating the location of the vehicle using the last known location of the vehicle.

8. The method of any of claims 3 through 5, wherein the regional speed-limit policies are stored in a memory of the vehicle.

9. The method of any of claims 3 through 5, wherein the regional speed-limit policies are obtained from a database located remote from the vehicle.

10. The method of any of claims 2 through 9, the method further comprising:
determining whether there is another vehicle traveling in an adjacent lane;
in response to determining that the other vehicle is traveling in an adjacent lane, determining whether the other vehicle is not subject to a different speed limit; and
in response to determining that the other vehicle is not subject to the different speed limit, determining an adjacent-vehicle-based speed limit based on a speed of the other vehicle, the adjacent-vehicle-based speed limit comprising an indirect indication of the speed limit of the at least one indirect indication of the speed limit.

11. The method of any of claims 2 through 10, the method further comprising:
determining whether there is a lead vehicle traveling in a same lane as the vehicle;
in response to determining that there is a lead vehicle traveling in the same lane as the vehicle, obtaining range and range-rate data for the lead vehicle; and
determining a lead-vehicle-based speed limit based on a speed of the lead vehicle, the lead-vehicle-based speed limit comprising an indirect indication of the speed limit of the at least one indirect indication of the speed limit.

12. The method of any of claims 2 through 11, the method further comprising:
obtaining a previous composite speed limit for the road;
determining, based on the previous composite speed limit, an expected speed-limit range for the composite speed limit;
determining whether the composite speed limit is within the expected speed-limit range; and
in response to determining that the composite speed limit is within the expected speed-limit range, controlling the vehicle based on the composite speed limit.

13. The method of any preceding claim, wherein the vehicle is operated by a semi-autonomous driving system or an autonomous driving system.

14. A system comprising at least one processor configured to perform the method of any one of claims 1 through 13.

15. A computer-readable storage medium comprising instructions that, when executed, cause at least one processor of a system to perform the method of any one of claims 1 through 13.
